# EUROPEAN PATENT APPLICATION

(11) **EP 4 040 011 A1**
(43) Date of publication of application: **10.08.2022**
(21) Application number: 22154111.3
(22) Date of filing: 28.01.2022
(51) Int. Cl.: F16F 9/34, F16F 9/46, B62K 25/28, B62K 25/30, F16F 9/06

(54) **A DAMPER WITH AN ANNULAR BASE VALVE FLOW SYSTEM**

(30) Priority: 28.01.2021 US 202163142751 P; 27.01.2022 US 202217586611
(71) Applicant: Fox Factory, Inc., Duluth, GA 30097 (US)
(72) Inventor: ESTON, Tyler, Duluth, GA 30097 (US)
(74) Representative: Lucas, Brian Ronald

(57) **Abstract**

A shock (35, 38) with an annular base valve flow system comprising:
a housing (120), said housing having an inner diameter (ID) and an outer diameter (OD); and
an annular base valve assembly (300; 400), said annular base valve assembly having an OD smaller than said ID of said housing, such that said annular base valve assembly is insertable into said housing (120), said annular base valve assembly (300; 400) comprising:
an intake pathway (305; 405) axially about a portion of said OD of said base valve assembly; and
an exhaust pathway (215; 415) axially about another portion of said OD of said base valve assembly.

## Description

### CROSS-REFERENCE TO RELATED APPLICATIONS

This application claims priority from United States Provisional Patent Application Serial Number 63/142,751, filed January 28, 2021, and from United States Patent Application Serial Number 17/586,611 filed January 27, 2022.

### FIELD OF THE INVENTION

Embodiments of the invention generally relate to shock absorbers.

### BACKGROUND

Shock absorbers (e.g., dampers) are used in numerous different vehicles and configurations to absorb some or all of a movement that is received at a first portion of a vehicle before it is transmitted to a second portion of the vehicle. For example, when a wheel hits a pothole, the encounter will cause an impact force on the wheel. However, by utilizing suspension components including one or more shock absorbers, the impact force can be significantly reduced or even absorbed completely before it is transmitted to a person on a seat of the vehicle. However, depending upon the terrain being traversed, it can be valuable to be able to change the amount of shock absorption provided by the shock for one or both of personal comfort and vehicle performance.

### SUMMARY

According to some embodiments there is provided a shock. The shock may comprise an annular base valve flow system. The shock may comprise a housing. The housing may have an inner diameter (ID) and an outer diameter (OD). The shock may comprise an annular base valve assembly. The annular base valve assembly may have an OD smaller than said ID of said housing, such that said annular base valve assembly is insertable into said housing. The annular base valve assembly may comprise an intake pathway axially about a portion of said OD of said base valve assembly. The annular base valve assembly may comprise an exhaust pathway axially about another portion of said OD of said base valve assembly.

In some embodiments the shock may comprise a control solenoid. The control solenoid may be fluidly coupled with said intake pathway of said annular base valve assembly. The control solenoid may be configured to control a flow of a working fluid through said intake pathway.

In some embodiments the annular base valve assembly may be insertable into said housing without concern about an axial orientation of said annular base valve assembly with respect to said housing.

In some embodiments said annular base valve assembly may be axially symmetric.

In some embodiments said housing may be a damper housing.

In some embodiments said housing may be an external reservoir housing.

In some embodiments said housing may further comprise a base valve seat axially about said ID of said housing. The base valve seat may be configured to properly locate said annular base valve assembly when said annular base valve assembly is inserted into said housing.

In some embodiments said housing may further comprise an upper O-ring gland axially about said ID of said housing. The upper O-ring gland may be located above a base valve seat portion such that when said annular base valve assembly is properly located within said housing, said upper O-ring gland is aligned with a portion of said OD of said base valve assembly exterior of both said intake pathway and said exhaust pathway.

In some embodiments the housing may further comprise an upper O-ring configured to fit with said upper O-ring gland. The upper O-ring may form a seal between said annular base valve assembly and said housing to prevent a working fluid from bypassing a valving of said annular base valve assembly as said working fluid flows from a main damper body to said intake pathway.

In some embodiments the annular base valve assembly may further comprise a middle O-ring gland about a portion of said OD of said base valve assembly. The middle O-ring gland may be located between said intake pathway and said exhaust pathway. The annular base valve assembly may further comprise a middle O-ring configured to fit with said middle O-ring gland. The middle O-ring may form a seal between said annular base valve assembly and said housing to prevent a working fluid from moving between said intake pathway and said exhaust pathway.

According to some embodiments there is provided a shock with an annular base valve flow system. The shock may comprise a housing. The housing may have an inner diameter (ID) and an outer diameter (OD). The shock may comprise an annular base valve assembly. The annular base valve assembly may have an OD smaller than said ID of said housing, such that said annular base valve assembly is insertable into said housing. The annular base valve assembly may comprise an annular intake pathway axially about a portion of said OD of said base valve assembly. The annular base valve assembly may comprise an annular exhaust pathway axially about another portion of said OD of said base valve assembly. The annular base valve assembly may comprise a base valve seat axially about said ID of said housing. The base valve seat may be configured to properly locate said annular base valve assembly when said annular base valve assembly is inserted into said housing. The annular base valve assembly may comprise a control solenoid. The control solenoid may be fluidly coupled with said annular intake pathway of said annular base valve assembly. The control solenoid may be configured to control a flow of a working fluid through said annular intake pathway.

In some embodiments said annular base valve assembly may be axially symmetric, such that said annular base valve assembly is insertable into said housing without concern about an axial orientation of said annular base valve assembly with respect to said housing.

In some embodiments said housing may a damper housing.

In some embodiments said housing may be an external reservoir housing.

In some embodiments the housing may further comprise an upper O-ring gland axially about said ID of said housing. The upper O-ring gland may be located above a base valve seat portion such that when said annular base valve assembly is properly located within said housing, said upper O-ring gland is aligned with a portion of said OD of said base valve assembly exterior of both said annular intake pathway and said annular exhaust pathway. The housing may further comprise an upper O-ring configured to fit with said upper O-ring gland. The upper O-ring may form a seal between said annular base valve assembly and said housing to prevent a working fluid from bypassing a valving of said annular base valve assembly as said working fluid flows from a main damper body to said annular intake pathway.

In some embodiments the annular base valve assembly may further comprise a middle O-ring gland about a portion of said OD of said base valve assembly. The middle O-ring gland may be located between said annular intake pathway and said annular exhaust pathway. The annular base valve assembly may further comprise a middle O-ring configured to fit with said middle O-ring gland, said middle O-ring to form a seal between said annular base valve assembly and said housing to prevent a working fluid from moving between said annular intake pathway and said annular exhaust pathway.

In some embodiments the shock with an annular base valve flow system may be adapted to absorb some or all of a movement that is received at a first portion of a vehicle before it is transmitted to a second portion of the vehicle.

In some embodiments the shock may comprise a shock absorber or damper for a vehicle.

According to some embodiments there is provided a vehicle comprising a shock as set out above, or as described or as claimed anywhere herein.

In some embodiments the vehicle may comprise a road bike, a mountain bike, a gravel bike, an electric bike (e-bike), a hybrid bike, a scooter, a motorcycle, an ATV, a personal water craft (PWC), a four-wheeled vehicle, a snow mobile, or a UTV such as a side-by-side.

According to some embodiments there is provided a guard. The guard may be adapted for use with a shock absorber or a damper for a vehicle. The guard may comprise an inner diameter (ID) that is larger than an outer diameter (OD) of an external reservoir housing. The guard may comprise an axial length, said axial length to cover an axial portion of said external reservoir housing. The guard may comprise a shape that allows said guard to fit about a portion of said outside of said damper housing and around said external reservoir housing.

In some embodiments the shape may allow the guard to fit about a portion of said outside of said damper housing and completely around said external reservoir housing.

In some embodiments the guard may comprise a retaining feature to fixedly couple said guard with said damper housing at a given location. The retaining feature may be selected from a group consisting of a clip, a screw, a rivet, and a quick release.

In some embodiments the guard may comprise a retaining feature to fixedly couple said guard with said damper housing at a given location. The retaining feature may be selected from a group consisting of a clip, a screw, a rivet, and a quick release.

In some embodiments the guard may comprise a composite material.

According to some embodiments there is provided a shock absorber or a damper for a vehicle, which shock absorber or damper comprises a guard as set out above, or as described or as claimed anywhere herein.

### BRIEF DESCRIPTION OF THE DRAWINGS

Aspects of the present invention are illustrated by way of example, and not by way of limitation, in the accompanying drawings, wherein:
Figure 1 is a perspective view of a bicycle having a shock with an annular base valve flow system, in accordance with an embodiment.
Figure 2 is a perspective view of a shock with an annular base valve flow system, in accordance with an embodiment.
Figure 3A is a cross-sectional perspective view of a damper housing with a clocking feature, in accordance with an embodiment.
Figure 3B is a perspective view of a clocked base valve assembly, in accordance with an embodiment.
Figure 3C is a cross-sectional perspective view of the clocked base valve assembly, in accordance with an embodiment.
Figure 3D is a cross-sectional side view of the clocked base valve assembly installed in the damper housing, in accordance with an embodiment.
Figure 4A is a side view of an annular base valve assembly, in accordance with an embodiment.
Figure 4B is an axial cross-sectional side view of the annular base valve assembly installed in the damper housing, in accordance with an embodiment.
Figure 4C is an axially-offset cross-sectional side view of the annular base valve assembly installed in the damper housing, in accordance with an embodiment.
Figure 4D is an axial cross-sectional side view of the annular base valve assembly installed in the external reservoir, in accordance with an embodiment.
Figure 4E is a zoomed in view of an upper O-ring and upper O-ring gland of Figure 4D.
Figures 5 is a perspective view of a guard located about the reservoir of the shock assembly, in accordance with an embodiment.
Figure 6 is an enlarged section view showing an active valve and a plurality of valve operating cylinders in selective communication with an annular piston surface of the active valve, in accordance with an embodiment.
Figure 7 is a schematic diagram showing a control arrangement for an active valve, in accordance with an embodiment.
Figure 8 is a schematic diagram of a control system based upon any or all of vehicle speed, damper rod speed, and damper rod position, in accordance with an embodiment.

The drawings referred to in this description should be understood as not being drawn to scale except if specifically noted.

### DESCRIPTION OF EMBODIMENTS

The detailed description set forth below in connection with the appended drawings is intended as a description of various embodiments of the present invention and is not intended to represent the only embodiments in which the present invention is to be practiced. Each embodiment described in this disclosure is provided merely as an example or illustration of the present invention, and should not necessarily be construed as preferred or advantageous over other embodiments. In some instances, well known methods, procedures, and objects have not been described in detail as not to unnecessarily obscure aspects of the present disclosure.

In general, a suspension system for a vehicle provides a motion modifiable connection between a portion of the vehicle that is in contact with a surface and some or all of the rest of the vehicle that is not in contact with the surface. For example, the portion of the vehicle that is in contact with the surface can include one or more wheel(s), skis, tracks, hulls, etc., while some or all of the rest of the vehicle that is not in contact with the surface include suspended portions such as anything on a frame, a seat, handlebars, engines, cranks, etc.

In its basic form, the suspension is used to increase ride comfort, performance, endurance, component longevity and the like. In general, the force of jarring events, rattles, vibrations, jostles, and the like which are encountered by the portion of the vehicle that is in contact with the surface are reduced or even removed as it transitions through the suspension before reaching suspended portions of the vehicle to include components such as seats, steering wheels/handlebars, pedals/foot pegs, fasteners, drive trains, engines, and the like.

For example, on a wheeled vehicle, a portion of the wheel (or tire) will be in contact with the surface being traversed (e.g., pavement, dirt, gravel, sand, mud, rocks, etc.) while a shock assembly and/or other suspension system components will be coupled between a wheel retaining assembly and the suspended portion of the vehicle (often a portion of the vehicle frame and associated systems, the seat, handlebars, pedals, controls, steering wheel, interior, etc.).

In a snow machine, a portion of the track and/or the skis that will be in contact with the surface being traversed (e.g., snow, ice, etc.) while a shock assembly and/or other suspension components will be coupled between a track retaining assembly (and similarly the skis retaining assembly) and the suspended portion of the vehicle (usually including the engine and associated systems, the seat, handlebars, etc.).

In a boat or PWC vehicle, a portion of the hull will be in contact with the surface of the water while a shock assembly and/or other suspension components will be coupled between the hull and the suspended portion(s) of the vehicle (such as the seat, the handlebars, a portion of the vehicle frame, and/or the like).

In an airplane in flight, it is the airframe that is in contact with the surface being traversed (e.g., the air) while a shock assembly and/or other suspension components will be coupled between the airframe and the suspended portion(s) of the vehicle (such as the seats and the like).

As vehicle utilization scenarios change, one or more shock assemblies of the suspension system can be adjusted for different characteristics based on the use type of the vehicle, terrain, purpose (e.g., rock crawl, normal use, race set-up, etc.), and the like. For example, a downhill mountain bike rider (motocross rider, off-road truck driver, side-by-side rider, snow machine racer, etc.) would want a suspension configuration with a large range of motion and aggressive rebound and compression speeds to maintain as much contact as possible between the tires and the ground by absorbing the terrain events such as bumps, ruts, roots, rocks, dips, etc. while reducing the impacts felt at the suspended portion and also have the suspension return to its SAG setting as quickly as possible in preparation for the next encounter.

In contrast, a street bike racer (track racing vehicle, boat/PWC racer, etc.) would want a firmer suspension configuration with a very small range of motion to provide feel for the grip of the tire, maintain friction and/or aerodynamic geometries, and the like, in order to obtain the maximum performance from the vehicle.

In a normal use scenario, such as a trip to the local store, a ride around town or on a path, a drive to grandma's house, a boat ride out on a lake, etc., one choice for the suspension configuration would be based on providing the most comfort.

In one embodiment, there may be times where changes to a suspension component are desired during a given ride/drive. For example, a bike rider in a sprinting scenario would often want to firm up or possibly even lockout the suspension component to remove the opportunity for rider induced pedal bob. Similarly, a ride/drive from a paved road to an off-road environment (or vice-versa) would also be a time when a change to one or more suspension component settings is valuable.

With respect to the term lockout, for purposes of the following discussion, lockout refers to the most restricted flow state attainable or desirable. Thus, in one embodiment, lockout refers to a stoppage of all fluid flow through a given fluid path. However, in another embodiment, lockout does not stop all the fluid flow through a given fluid path. For example, a manufactured component may not be able to stop all fluid flow due to tolerances, or a manufacturer (designer, etc.) may not want to stop all fluid flow for reasons such as lubrication, cooling, etc. Similarly, a lockout state could be a "perceived lockout"; that is, the flow area through a flow path of the damper has been reduced to a minimum size for a given damper, machine, environment, speed, performance requirement, etc. For example, in one "perceived lockout" most, but not all, of the fluid flow is minimized while in another "perceived lockout" the fluid flow is reduced by only half (or a third, quarter, three-quarters, or the like).

In the following discussion, the term ride height refers to a distance between a portion of a vehicle and the surface across which the vehicle is traversing. Often, ride height is based on one or more of a number of different measurements such as, but not limited to, a distance between a part of the vehicle and the ground, a measurement between the top of an unsprung portion of a vehicle and a suspended portion of the vehicle there above, etc. For example, a portion of the wheel(s) (or ski, track, hull, etc.) will be in contact with the surface, while one or more shock assemblies and/or suspension components maintain the suspended portion of the vehicle a certain height there above.

In one embodiment using a wheeled vehicle example, a portion of the wheel will be in contact with the surface while a shock assembly and/or other suspension components will be coupled between a wheel retaining assembly and the suspended portion of the vehicle (often a portion of the vehicle frame). The ride height is established by the geometries of the shock assembly and/or other suspension components, the wheel retaining assembly, the wheel and tire profile, and the like.

Similarly, in a snow machine, a portion of the track (and similarly the skis) will be in contact with the surface while a shock assembly and/or other suspension components will be coupled between a track retaining assembly (and similarly the skis retaining assembly) and the suspended portion of the vehicle (often a portion of the vehicle frame). Here again, the ride height is established by the geometries of the shock assembly and/or other suspension components, the track and ski retaining assemblies, the track and/or ski profile, and the like.

In one embodiment, such as a boat or PWC vehicle, a portion of the hull will be in contact with the surface of the water while a shock assembly and/or other suspension components will be coupled between the hull and the suspended portion(s) of the vehicle (such as the seat, the handlebars, a portion of the vehicle frame, and/or the like). Here again, the ride height is established by the geometries of the shock assembly and/or other suspension components, with respect to the hull and the suspended portion(s) of the vehicle.

The term initial SAG settings or "SAG" refers to a pre-defined vehicle ride height and suspension geometry based on the initial compression of one or more shock assemblies of the suspension system for a given vehicle when it is within its normal load envelope configuration (e.g., with a rider/driver and any initial load weight). Once the SAG is established for a vehicle, it will be the designated ride height of the vehicle, until and unless the SAG is changed.

The initial SAG for a vehicle is usually established by the manufacturer. The vehicle SAG can then be modified and/or adjusted by an owner, a mechanic, or the like. For example, an owner can modify the SAG to designate a new normal ride height based on a vehicle use purpose, load requirements that are different than the factory load configuration, an adjustment modification and/or replacement of one or more of the suspension components, a change in tire size, a performance adjustment, aesthetics, and the like.

In one embodiment, the initial manufacturer will use SAG settings resulting in a pre-established vehicle ride height based on vehicle use, size, passenger capacity, load capacity, and the like. For example, a truck (side-by-side, car, or the like) may have a pre-established SAG based on an expected load (e.g., a number of passengers, an expected cargo requirement, etc.).

Regardless of the vehicle type, once the SAG is established, in a static situation the ride height of the expectedly loaded vehicle should be at or about the established SAG. When in motion, the ride height will change as the vehicle travels over the surface, and while the suspension system is used to reduce the transference of any input forces received from the surface to the rest of the vehicle it is also used to maintain the vehicle's SAG.

However, when additional weight is added to the vehicle, the suspension and one or more shock assemblies will be compressed, and the vehicle ride height will be less than the SAG.

For example, if a vehicle such as a snow machine, PWC, boat, motorcycle, or bicycle is loaded with an additional 100 lbs. of cargo in the rear, the extra 100-pound load will cause shock assembly compression (and the like) thereby causing the vehicle to ride lower in the rear (or to ride in a bow up orientation). In general, skewed rear-low ride height will move the vehicle out of SAG and change the vehicle geometry, e.g., cause a slant upward from rear to front. Often, an out of SAG condition is visually identifiable and in this particular example can result in lightness in steering, rear suspension bottom out, forward visual obstruction, and the like.

In one embodiment, for example in a side-by side that is loaded with 250 lbs. of additional weight, the additional weight will reduce the available operating length of one or more suspension components which can be detrimental to steering and performance characteristics, could cause an unwanted impact between wheel (or wheel suspension) and frame, increase the roughness of the ride, increase suspension stiffness, result in suspension bottom out, loss of control, tire blow out, and the like.

In one embodiment, for example in a truck that is loaded with 500 lbs. of additional weight, when the weight is added to the vehicle, if it is not centered, it will not only cause a change in the front or rear SAG (depending upon the load location fore or aft), but will also cause SAG changes that will differ between the left and right side of the vehicle. For example, if the load is in the rear and off-center to the left, the load-modified ride-height of the vehicle will be lopsided. That is, not only will the rear of the vehicle be lower than the front, but the left-side suspension will also be compressed more than the right-side suspension causing the rear left of the vehicle to have a lower ride-height than the other three corners.

Thus, while the entire rear of the vehicle will be out of SAG and therefore riding lower than the front of the vehicle, it will also be lopsided between the left and right sides. Such lopsided suspension characteristics can be extremely deleterious while driving and will often result in a number of deleterious issues including, but not limited to: steering problems, suspension bottom out, loss of control, tire blowout, and vehicle rollover.

In contrast to the examples above, when the weight on the vehicle (e.g., rider, passengers, cargo, etc.) is less than the expectedly loaded vehicle weight, the suspension and one or more shock assemblies will be less compressed, and the vehicle ride height will be higher than the SAG. This lighter loaded situation can also result in a number of deleterious issues including, but not limited to: improper seat height (e.g., a rider will be higher off the ground than expected), change in vehicle height clearance, suspension top-out, suspension issues caused by the vehicle operating outside of the operating envelope for the suspension, and the like.

Additional information regarding SAG and SAG setup can be found in U.S. Patent 8,838,335.

A damper, such as a strut or shock assembly, often include a damper body surrounded by or used in conjunction with a mechanical spring or constructed in conjunction with an air spring or both. The damper often consists of a damping piston and piston rod telescopically mounted in a fluid filled cylinder (or damper housing). The damping or working fluid may be, for example, hydraulic oil. A mechanical spring may be a helically wound spring that surrounds or is mounted in parallel with the damper body. As used herein, the terms "down" "up" "downward" upward" "lower" "upper" and other directional references are relative and are used for reference only.

Embodiments described herein include a base valve integration that utilizes an axially symmetric interface with a pair of coaxial annular cavities to communicate working fluid flow from a centralized annular base valve assembly to an external control solenoid. The annular base valve assembly reduces part machining cost, part inspection cost, assembly error modes, and assembly time. The embodiments also provide a design space for leak-path detection features.

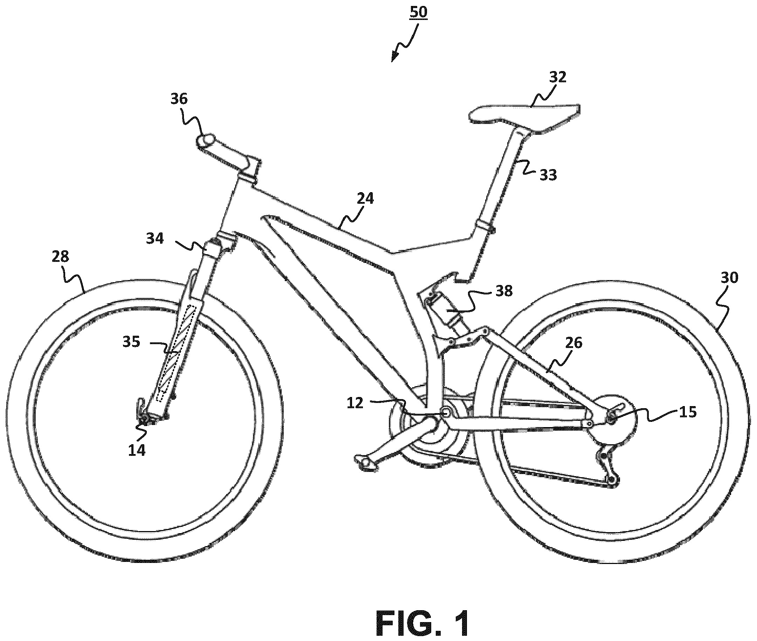

Referring now to Figure 1, is a perspective view of a bicycle 50 having a user accessible shock travel spacer integrated with at least one shock assembly is shown in accordance with an embodiment. Although a bicycle is used in the discussion. In one embodiment, the shock assembly could be used on another vehicle such as, but not limited to a road bike, a mountain bike, a gravel bike, an electric bike (e-bike), a hybrid bike, a scooter, a motorcycle, an ATV, a personal water craft (PWC), a four-wheeled vehicle, a snow mobile, a UTV such as a side-by-side, and the like. Thus, between the disclosed examples as provided in view of a bicycle, the disclosed embodiment for implementing the user accessible shock travel spacer on a shock assembly can be used on shock assemblies used by vehicles with wheels, skis, tracks, hulls, and the like. As such, it should be appreciated that the disclosed examples and embodiment for modifying a shock assembly, would be similar to performing the shock assembly modifications on a different vehicle.

In one embodiment, bicycle 50 has a main frame 24 with a suspension system comprising a swing arm 26 that, in use, is able to move relative to the rest of main frame 24; this movement is permitted by, inter alia, rear shock assembly 38. The front fork assembly 34 also provide a suspension function via a front shock assembly 35 in at least one fork leg. In one embodiment, at least one valve in the shock assembly is an active valve (such as active valve 450 discussed herein).

In one embodiment, bicycle 50 is a full suspension bicycle. In another embodiment, bicycle 50 has only a front shock assembly 35 and no rear shock assembly 38 (e.g., a hard tail). In yet another embodiment, bicycle 50 could have a saddle 32 or seatpost 33 suspension (e.g., a dropper post, shock assembly within seatpost 33, etc.). In one embodiment, bicycle 50 could have a combination of at least two different suspension components such as, for example, front shock assembly 35, rear shock assembly 38, a saddle 32 or seatpost 33 suspension, etc. Moreover, bicycle 50 could be a road bike, a mountain bike, a gravel bike, an electric bike (e-bike), a hybrid bike, a motorcycle, a scooter, or the like.

In one embodiment, swing arm 26 is pivotally attached to the main frame 24 at pivot point 12. Although pivot point 12 is shown in a specific location, it should be appreciated that pivot point 12 can be found at a different location depending upon the rear suspension configuration. The use of the pivot point 12 herein is provided merely for purposes of clarity.

For example, in a hardtail bicycle embodiment, there would be no pivot point 12. In one embodiment of a hardtail bicycle, main frame 24 and swing arm 26 would be formed as a fixed frame.

Bicycle 50 includes a front wheel 28 which is coupled with the front fork assembly 34 via axle 14. In one embodiment, a portion of front fork assembly 34 (e.g., a steerer tube) passes through the bicycle main frame 24 and couples with handlebar assembly 36. In so doing, the front fork assembly and handlebars are rotationally coupled with the main frame 24 thereby allowing the rider to steer the bicycle 50.

Bicycle 50 includes a rear wheel 30 which is coupled to the swing arm 26 at rear axle 15. A rear shock assembly 38 is positioned between the swing arm 26 and the frame 24 to provide resistance to the pivoting motion of the swing arm 26 about pivot point 12. Thus, the illustrated bicycle 50 includes a suspension member between swing arm 26 and the main frame 24 which operate to substantially reduce rear wheel 30 impact forces from being transmitted to the rider of the bicycle 50.

In one embodiment, saddle 32 is connected to the main frame 24 via seatpost 33. In one embodiment, seatpost 33 is a dropper seatpost. In one embodiment, front shock assembly 35, rear shock assembly 38, seatpost 33, handlebar assembly 36, and/or the like include one or more active and/or semi-active damping components such as, or similar to, the active valve 450 discussed herein.

In one embodiment, bicycle 50 includes a suspension controller system including a controller, power source, one or more sensors, etc. Additional information for vehicle suspension systems, sensors, and their components as well as adjustment, modification, and/or replacement aspects including manually, semi-actively, semi-actively, and/or actively controlled aspects and wired or wireless control thereof is provided in U.S. Patents 8,838,335; 9,353,818; 9,682,604; 9,797,467; 10,036,443; 10,415,662.

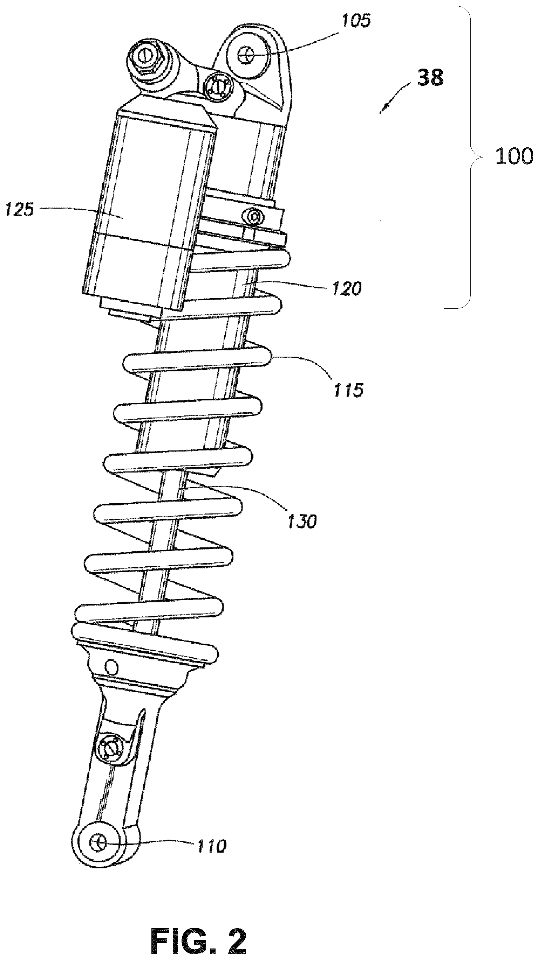

With reference now to Figure 2, a perspective view of an active valve damper 38 is shown in accordance with one embodiment. In one embodiment, active valve damper 38 includes a top cap portion 100, eyelets 105 and 111, damper housing 120, helical spring 115, piston shaft 130, and piggyback (or external reservoir 125). A configuration of an external reservoir 125, including at least a reservoir housing and a floating piston, is described in U.S. Pat. No. 7,374,028.

In one embodiment, the damper housing 120 includes a piston and chamber and the external reservoir 125 includes a floating piston and pressurized gas to compensate for a reduction in volume in the main damper chamber of the damping assembly 38 as the piston shaft 130 moves into the damper body. Fluid communication between the main chamber of the damper and the external reservoir 125 may be via a flow channel including an adjustable needle valve. In its basic form, the damper works in conjunction with the helical spring and controls the speed of movement of the piston shaft by metering incompressible fluid from one side of the damper piston to the other, and additionally from the main chamber to the external reservoir 125, during a compression stroke (and in reverse during the rebound or extension stroke).

Although a coil sprung damping assembly is shown in Figure 2, this is provided as one embodiment and for purposes of clarity. In one embodiment, the active valve damper 38 could be a different type such as, but not limited to, an air sprung fluid damper assembly, a stand-alone fluid damper assembly, and the like.

### A clocked Base Valve Assembly

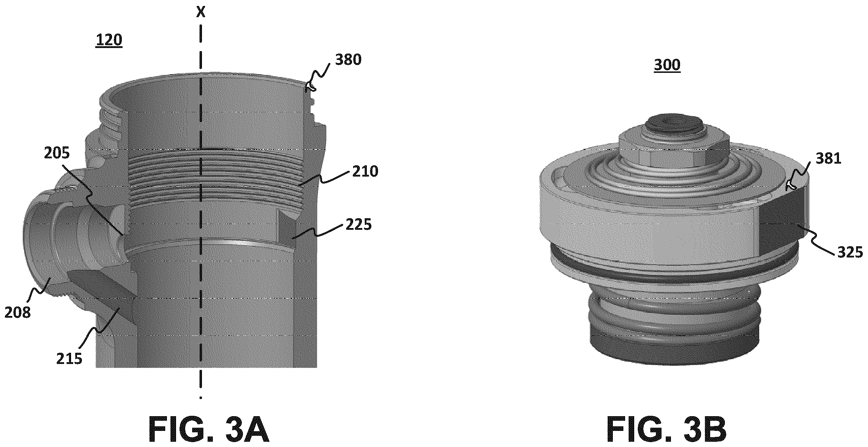

With reference now to Figure 3A, a cross-sectional perspective view of a damper housing 120 with a damper housing clocking feature 225 is shown in accordance with an embodiment. In general, the damper housing 120 has an X-axis. The damper housing 120 will have an outer diameter (OD). The damper housing 120 will have an inner diameter (ID), where the ID of the damper housing 120 will form a chamber. In one embodiment, damper housing 120 includes an intake fluid pathway opening 205, a threaded portion 210, an exhaust fluid pathway 215, at least one damper housing clocking feature 225, and an optional indicator 380.

In one embodiment, damper housing 120 includes a control solenoid housing 208 (or portion thereof) and/or a control solenoid 350 about the intake fluid pathway opening 205 through the damper housing 120. In one embodiment, control solenoid 350 is part of an active valve such as active valve 650.

In one embodiment, control solenoid housing 208 (or portion thereof) projects from the OD of the damper housing 120 somewhat perpendicular to X-axis. In one embodiment, the control solenoid housing 208 (or portion thereof) is part of the damper housing 120 and is made during the formation of the damper housing 120. For example, during the pressing, casting, stamping, milling, machining, and/or other process used to make and/or complete the damper housing 120.

In another embodiment, the control solenoid housing 208 (or portion thereof) is a stand-alone component that is coupled with the damper housing 120 via the intake fluid pathway opening 205 in the damper housing 120. For example, in one embodiment, the intake fluid pathway opening 205 may be threaded and the control solenoid housing 208 (or portion thereof) is threaded into the intake fluid pathway opening 205 during assembly of the two components. In another embodiment, the control solenoid housing 208 (or portion thereof) may be press fitted into the intake fluid pathway opening 205 of the damper housing 120 during assembly. In yet another embodiment, the control solenoid housing 208 (or portion thereof) is coupled with intake fluid pathway opening 205 via a different coupling method used during component assembly.

Referring now to Figure 3B, a perspective view of a clocked base valve assembly 300 with a base valve clocking feature 325 is shown in accordance with an embodiment. In one embodiment, clocked base valve assembly 300 includes an optional indicator 380.

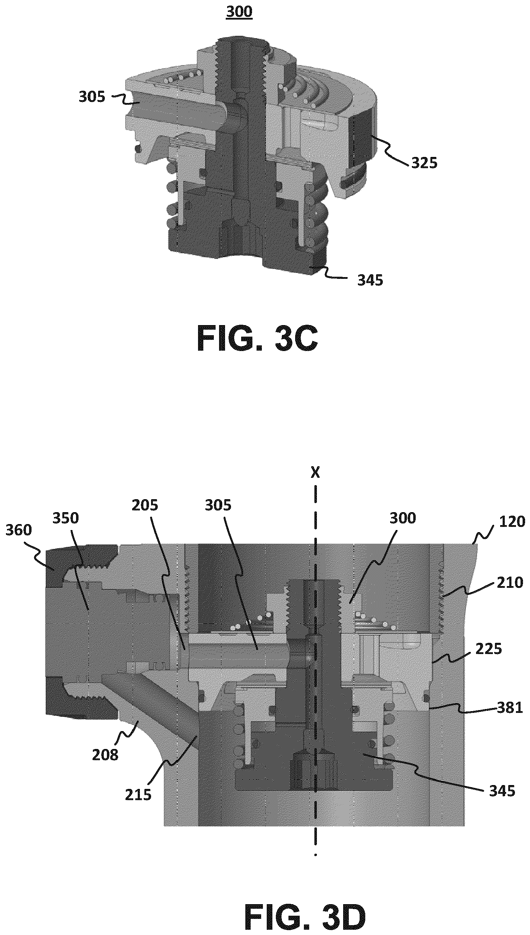

With reference now to Figure 3C, a cross-sectional perspective view of the clocked base valve assembly 300 with the base valve clocking feature 325 of Figure 3B is shown in accordance with an embodiment. The intake fluid pathway 305 is shown as oriented with the valving 345 of the clocked base valve assembly 300.

With respect to Figures 3A-3C, in one embodiment, the clocking feature provided on at least a portion of both the damper housing 120 and the clocked base valve assembly 300 is an alignment feature. Although it is referred to herein as a clocking feature, it is well suited to being any type of feature that allows for a specific alignment/orientation between damper housing 120 and the clocked base valve assembly 300.

In one embodiment, the clocking feature is a flat feature. In another embodiment, the clocking feature is a feature selected from one or a combination of features such as, but not limited to, a flat feature, a geometric feature, a tongue-and-groove set of features (that may be of any geometric shape, e.g., a square, u-shape, semi-circular shape, and the like), another alignment type feature, a combination of two or more features, and the like.

In one embodiment, the damper housing clocking feature 225 and is made during the formation of the damper housing 120. For example, during the pressing, casting, stamping, milling, machining, and/or other process used to make and/or complete the damper housing 120. In one embodiment, the base valve clocking feature 325 is made during the formation of the clocked base valve assembly 300 component that includes the intake fluid pathway 305 and/or the base valve clocking feature 325. For example, during the pressing, casting, stamping, milling, machining, and/or other process used to make and/or complete the clocked base valve assembly 300 component that includes the intake fluid pathway 305 and/or the base valve clocking feature 325.

Referring now to Figure 3D, a cross-sectional side view of the clocked base valve assembly 300 with the clocking features installed in the damper housing 120 is shown in accordance with an embodiment. In one embodiment, the clocked base valve assembly 300 is on the coaxial (e.g., X-axis) of the body of the damper housing. The control solenoid 350 is off-axis (e.g., perpendicular to the X-axis) with respect to the damper housing 120.

During assembly of the damper, the clocked base valve assembly 300 is inserted into the damper housing 120 along X-axis. However, in one embodiment, the control solenoid 350 will not be located within the damper housing 120 but will instead be located off-axis with respect to X-axis. As such, the damper housing 120 will include an intake fluid pathway opening 205 therethrough to allow the fluid to flow along the intake fluid pathway 305 from the clocked base valve assembly 300 through intake fluid pathway opening 205 and to the control solenoid 350.

In one embodiment, the control solenoid 350 may be located remotely from (or flexibly coupled to) the intake fluid pathway opening 205 such as via a flexible hose, or the like. For example, in one embodiment, the control solenoid 350 may be added to an existing or legacy damper assembly by forming an intake fluid pathway opening 205 in the damper housing 120 and adding a damper housing clocking feature 225 (described in detail herein) to the damper housing 120. In one embodiment, the existing or legacy base valve assembly would also be replaced with a clocked base valve assembly 300 having a base valve clocking feature 325 that works with the damper housing 120 clocking feature.

In one embodiment, the off-axis control solenoid 350 (which in one embodiment is an electronically controllable active valve such as described herein, and in another embodiment, is manually operable using features such as knob 360) is used to affect damping properties of the clocked base valve assembly 300. In order to affect the damping properties of the clocked base valve assembly 300, working fluid is provided to and from the control solenoid 350. In one embodiment, the working fluid flows to the control solenoid 350 via intake fluid pathway 305 and flows from the control solenoid 350 via exhaust fluid pathway 215.

During assembly of the damper, the intake fluid pathway opening 205 in the damper housing 120 will need to be aligned with the intake fluid pathway 305 coming from the clocked base valve assembly 300 in order for fluid to flow into the intake pathway of the control solenoid 350.

In one embodiment, the internal shape and/or geometry of the damper housing 120 has axial symmetry except for the damper housing clocking feature 225 which is not an axial symmetric feature within the damper housing 120. In one embodiment, the clocked base valve assembly 300 also has a relatively axial symmetry except for the base valve clocking feature 325 which not an axial symmetric feature on the clocked base valve assembly 300.

For example, in one embodiment where the damper housing clocking feature 225 is a flat clocking feature, the inner diameter (ID) of the damper housing 120 will be relatively axial symmetric except for the flat clocking feature. Similarly, the outer diameter (OD) of the clocked base valve assembly 300 will also be relatively axial symmetric except for the flat base valve clocking feature 325 thereon. As such, when the clocked base valve assembly 300 is inserted into the damper housing 120, the clocking features (e.g., the two flat clocking feature surfaces in this example) will need to be in alignment in order for the clocked base valve assembly 300 to be correctly seated within the damper housing 120. In so doing, the seating of the clocked base valve assembly 300 within the damper housing 120 will ensure that the clocking features are aligned and thus, the intake fluid pathway 305 of the clocked base valve assembly 300 will be in alignment with the intake fluid pathway opening 205 of the damper housing 120 and therefore the intake pathway of the control solenoid 350.

In another example, such as an embodiment where the clocking feature is a tongue-and-groove type feature, the ID of the damper housing 120 will be relatively axial symmetric except for the tongue (or groove) damper housing clocking feature 225. Similarly, the OD of the clocked base valve assembly 300 will also be relatively axial symmetric except for the groove (or tongue) base valve clocking feature 325 thereon. In other words, one of the damper housing 120 or the clocked base valve assembly 300 will have the tongue clocking feature and the other of the damper housing 120 or the clocked base valve assembly 300 will have the groove clocking feature. When the clocked base valve assembly 300 is inserted into the damper housing 120, the clocking features (e.g., the tongue clocking feature and the groove clocking feature) will need to be in alignment in order for the clocked base valve assembly 300 to be correctly seated within the damper housing 120. In so doing, the seating of the clocked base valve assembly 300 within the damper housing 120 will ensure that the clocking features are aligned and thus, the intake fluid pathway 305 of the clocked base valve assembly 300 will be in alignment with the intake fluid pathway opening 205 of the damper housing 120 and therefore the intake pathway of the control solenoid 350.

In one embodiment, the damper housing clocking feature 225 on the ID of the damper housing 120 may be found in a certain section of the damper housing 120. For example, in the flat spot damper housing clocking feature 225 (or a tongue-and-groove type clocking feature where the groove is in the clocked base valve assembly 300), since the damper housing clocking feature 225 shape does not expand the OD of the clocked base valve assembly 300, the damper housing clocking feature 225 can be provided at the section of the damper housing 120 indicative of the correct seating height of the clocked base valve assembly 300. In one embodiment, the correct seating height is where the O-ring of the clocked base valve assembly 300 sits in the O-ring gland (or O-ring seat) formed about the ID of the damper housing 120 below the threads in the ID of the damper housing 120.

In one embodiment, the damper housing clocking feature 225 on the ID of the damper housing 120 may be along a larger length (or even the entire length) of the damper housing 120. For example, in the tongue-and-groove type clocking feature where the tongue is projecting from the OD of the clocked base valve assembly 300 and the groove is in the ID of the damper housing 120, since the base valve clocking feature 325 shape expand a portion of the OD of the clocked base valve assembly 300, the groove damper housing clocking feature 225 would start at the approximate top of the ID of the damper housing 120, continue through the threads in the ID of the damper housing 120, and end at or above the O-ring gland about the ID of the damper housing 120.

In one embodiment, the end of the damper housing clocking feature 225 in the ID of the damper housing 120 is located such that the base valve clocking feature 325 of the clocked base valve assembly 300 will come to rest at the end of the damper housing clocking feature 225 at the correct seating height 381.

In one embodiment, a plurality of two or more alignment features may be used on the damper housing 120 and/or the clocked base valve assembly 300 to provide additional guidance during the assembly of the clocked base valve assembly 300 within the damper housing 120 and ensure the alignment of the intake fluid pathway 305 of the clocked base valve assembly 300 with the intake fluid pathway opening 205 of the damper housing 120. In one embodiment, when two or more alignment features are used, the alignment features may be modified such that incorrect orientation of the alignment features is impossible.

For example, in one embodiment, if two or more clocking features are provided in the damper housing 120 and/or on the clocked base valve assembly 300, one of the clocking features would be a first width and at least one other clocking feature would be a second different width. In so doing, the clocked base valve assembly 300 would properly seat in the damper housing 120 when the similar width clocking features are aligned, but would not properly seat if they were misaligned. In other words, the narrower width base valve clocking feature 325 on the clocked base valve assembly 300 might fit within the footprint of the wider width damper housing clocking feature 225 on the damper housing 120, but then the other wider width base valve clocking feature 325 on the clocked base valve assembly 300 would not fit within the footprint of the other narrower width damper housing clocking feature 225 of the damper housing 120.

In another embodiment, if three or more clocking features are provided in the damper housing 120 and/or on the clocked base valve assembly 300, the clocking features would be radially offset about the OD of the damper housing 120 and the ID of the clocked base valve assembly 300 such that they would only be in alignment when the clocked base valve assembly 300 is in its desired orientation within the damper housing 120. In so doing, the clocked base valve assembly 300 would properly seat in the damper housing 120 only when the radially offset clocking features were aligned, and would not properly seat if they were misaligned. For example, using three clocking features, the clocking feature may be set at a position such as 12 o'clock, 5 o'clock, and 7 o'clock. In so doing, each of the three clocking features would only be in alignment when the clocked base valve assembly 300 is in a specific orientation with respect to the damper housing 120. Although, clock positions are provided, it should be appreciated that the location of the three or more clocking features could be otherwise arranged as long as the clocking features would only be in alignment when the clocked base valve assembly 300 was in its pre-defined orientation with respect to the damper housing 120.

In one embodiment, the alignment feature or features may be formed such that one or more clocking features on one component help provide an orientation to the one or more clocking features on the other component during the assembly process. For example, in the tongue-and-groove clocking features, if the groove (or grooves) of the damper housing clocking feature 225 were on the damper housing 120, they would start out at a greater width than the tongue width on the base valve clocking feature 325(s) on the clocked base valve assembly 300. As the groove(s) descended down the damper housing 120 they would narrow as they descend until they are just wider than the tongue base valve clocking feature 325(s) on the clocked base valve assembly 300.

In one embodiment, the initial groove clocking feature width could be 1.5, 2, 3, 5, or any number of times larger than the width of the tongue clocking feature. In so doing, during the assembly, the tongue clocking feature would be easily aligned with the much larger groove clocking feature. As the clocked base valve assembly 300 was further inserted into the damper housing 120 toward its seating location, the groove clocking feature would narrow thereby interacting with the tongue clocking feature and adjusting the alignment of the intake fluid pathway 305 of the clocked base valve assembly 300 with respect to the intake fluid pathway opening 205 in the damper housing 120. At some point, (which may be only a few millimeters, less than half the distance to the seating location, half the distance to the seating location, more than half the distance to the seating location, almost all the way to the seating location, at the seating location, or the like) the groove clocking feature would narrow to its appropriate width to ensure the tongue clocking feature was properly aligned therein. This would result in the clocked base valve assembly 300 being seated in the damper housing 120 with the proper alignment between the intake fluid pathway 305 of the clocked base valve assembly 300 and the intake fluid pathway opening 205 in the damper housing 120.

In one embodiment, there is an indicator 380 at an upper location of the damper housing 120 that is indicative of the location of the damper housing clocking feature 225 on the ID of the damper housing 120. In so doing, during the assembly process, after the clocked base valve assembly 300 is inserted into the damper housing 120, the proper alignment between the damper housing 120 and the clocked base valve assembly 300 can be maintained by using the indicator 380 on the damper housing 120, if the damper housing clocking feature 225 within the damping housing is blocked from view by the clocked base valve assembly 300. In other words, the base valve clocking feature 325 on the clocked base valve assembly 300 would be in view and the indicator 380 at the upper location of the damper housing 120 would be used to keep the appropriate alignment between the clocked base valve assembly clocking feature 325 and the damper housing clocking feature 225 even if the actual view of the damper housing clocking feature 225 was obstructed.

In one embodiment, there is an indicator 381 at an upper location (or top) of the clocked base valve assembly 300 that is in alignment with the base valve clocking feature 325 of the clocked base valve assembly 300. In so doing, during the assembly process, after the clocked base valve assembly 300 is inserted into the damper housing 120, the proper alignment between the damper housing 120 and the clocked base valve assembly 300 can be maintained by using the indicator 381 on the clocked base valve assembly 300, if the clocking feature of the clocked base valve assembly 300 is blocked from view. In other words, the damper housing clocking feature 225 would be in view and the indicator 381 at the upper location (or top) of the clocked base valve assembly 300 would be used to keep the appropriate alignment between the clocked base valve assembly clocking feature 325 and the damper housing clocking feature 225 even if the actual view of the clocked base valve assembly 300 clocking feature was obstructed.

In one embodiment, there is an indicator 380 at an upper location of the damper housing 120 that is indicative of the location of the damper housing clocking feature 225 on the ID of the damper housing 120 and an indicator 381 at an upper location (or top) of the clocked base valve assembly 300 that is in alignment with the base valve clocking feature 325 of the clocked base valve assembly 300. In so doing, during the assembly process, after the clocked base valve assembly 300 is inserted into the damper housing 120, the proper alignment between the damper housing 120 and the clocked base valve assembly 300 can be maintained by using the indicator 380 on the damper housing 120 and/or the indicator 381 on the clocked base valve assembly 300, if the damper housing clocking feature 225 within the damping housing and/or the base valve clocking feature 325 of the clocked base valve assembly 300 is blocked from view. In so doing, the clocking features and/or the indicators would be used to keep the appropriate alignment between the clocked base valve assembly clocking feature 325 and the damper housing clocking feature 225 even if the actual view of one or both clocking features was obstructed.

Although the indicator discussion utilizes a single clocking feature pair, it should be appreciated that when multiple clocking feature pairs are utilized, multiple indicators may also be utilized. Moreover, in one embodiment, when multiple clocking feature pairs are utilized, if one or more of those multiple clocking features are different shapes to ensure the single direction alignment orientation, different indicators may be utilized to identify the one or more different clocking features having different shapes.

In general, when the intake fluid pathway 305 of the clocked base valve assembly 300 is in alignment with the intake fluid pathway opening 205 of the damper housing 120, the fluid will have unrestricted flow along the intake pathway to the control solenoid 350. For example, when the clocked base valve assembly 300 is inserted into the damper housing 120 and the clocking features are aligned, the clocked base valve assembly 300 is able to be seated at its proper depth 381 (e.g., the O-ring is in the O-ring gland) and the alignment will be correct.

However, when the clocked base valve assembly 300 is inserted into the damper housing 120 and the clocking features are not aligned, the clocked base valve assembly 300 is not able to be seated at its proper depth 381 (or even if it is seated at its proper depth-such as by excessive force during install, etc.) and there will be no alignment between the intake fluid pathway 305 of the clocked base valve assembly 300 and the intake fluid pathway opening 205 of the damper housing 120. In this condition, the intake fluid pathway 305 of the clocked base valve assembly 300 will not be aligned with the intake fluid pathway opening 205 of the damper housing 120, and the working fluid will not be able to flow along the intake pathway to the control solenoid 350.

In another example, when the clocked base valve assembly 300 is inserted into the damper housing 120 and the clocking features are not completely aligned, the clocked base valve assembly 300 is not able to be seated at its proper depth 381 (or even if it is seated at its proper depth-such as by excessive force during install, etc.) there will be an incomplete alignment between the intake fluid pathway 305 of the clocked base valve assembly 300 and the intake fluid pathway opening 205 of the damper housing 120. In this condition, e.g., where the intake fluid pathway 305 of the clocked base valve assembly 300 is partially aligned with the intake fluid pathway opening 205 of the damper housing 120, the working fluid will be able to partially flow through the intake pathway to the control solenoid 350, however, the effect and/or capabilities of the control solenoid 350 would be other than optimal.

### Annular Base Valve Assembly

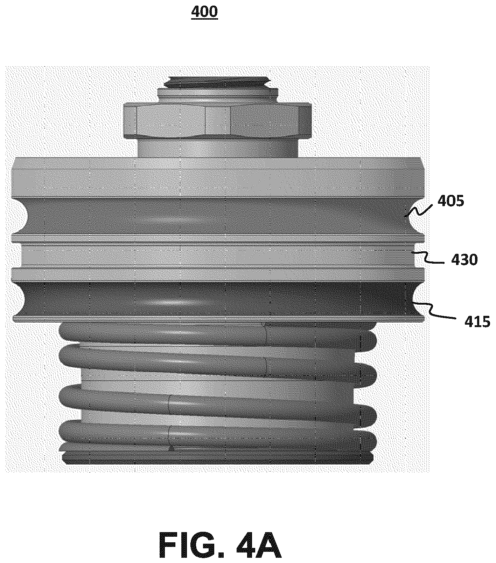

With reference now to Figure 4A, a side view of an annular base valve assembly 400 is shown in accordance with an embodiment. In one embodiment, instead of using a clocking feature, in an annular base valve assembly 400 embodiment, the intake pathway (e.g., an annular intake pathway 405) is formed axially about a portion of the perimeter of the annular base valve assembly 400 and the exhaust pathway (e.g., annular exhaust pathway 415) is formed axially about another portion of the perimeter of the annular base valve assembly 400.

In one embodiment, since the annular base valve assembly 400 has no clocking feature, a middle O-ring gland 430 is formed between the annular intake pathway 405 and the annular exhaust pathway 415 on the perimeter of the annular base valve assembly 400.

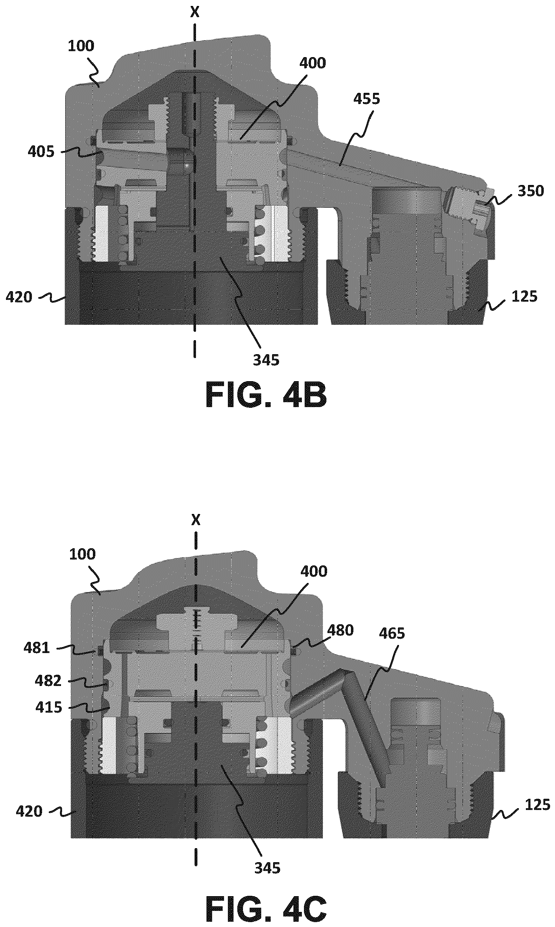

Referring now to Figure 4B, an axial cross-sectional side view of the annular base valve assembly 400 installed in the damper housing 420 is shown in accordance with an embodiment. In general, damper housing 420 is similar to damper housing 120 except there are no clocking features on the ID of damper housing 420 for purposes of orienting the annular base valve assembly 400 and as such, in one embodiment, damper housing 420 is symmetric about the X-axis. In one embodiment, annular base valve assembly 400 is installed in the top cap portion 100 at the top of damper housing 420.

In one embodiment, the axial cross-sectional side view of the annular base valve assembly 400 installed in the damper housing 420 shows the valving 345 and the annular intake pathway 405 of the annular base valve assembly 400 in alignment with intake pathway 455 providing fluid flow to control solenoid 350 which is located at the reservoir 125.

Figure 4C is an axially-offset cross-sectional side view of the annular base valve assembly 400 installed in the damper housing, in accordance with an embodiment. In one embodiment, the axially-offset cross-sectional side view of the annular base valve assembly 400 installed in the damper housing 420 shows the valving 345 and the annular exhaust pathway 415 of the annular base valve assembly 400 in alignment with exhaust pathway 465 providing fluid flow to the reservoir 125. In one embodiment, a middle O-ring 482 provides a seal between the annular base valve assembly 400 and the damper housing 420 to stop (or significantly reduce) the working fluid from moving between the annular intake pathway 405 and the annular exhaust pathway 415.

In one embodiment, the upper body cap 100 also has an upper O-ring gland 480. This upper O-ring gland 480 allows an upper O-ring 481 to be added above the annular intake pathway 405 of the annular base valve assembly 400.

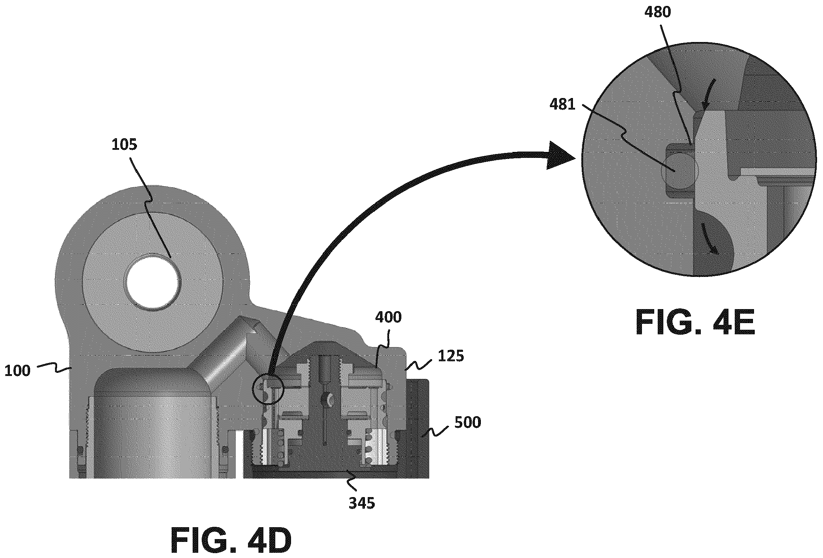

Referring now to Figure 4D an axial cross-sectional side view of the annular base valve assembly 400 installed in the external reservoir 125 is shown in accordance with an embodiment. In one embodiment, a portion of the annular base valve assembly 400 interacts with the top cap portion 100 at the top of reservoir 125.

Figure 4E is a zoomed in view of the upper O-ring 481 and upper O-ring gland 480 of Figure 4D. In one embodiment, the upper O-ring gland 480 is formed in the top cap portion 100 at the top of reservoir 125. In one embodiment, the upper O-ring gland 480 is formed at the top of reservoir 125. In one embodiment, the upper O-ring gland 480 is formed in the top cap portion 100 at the top of damper housing 420 (as shown in Figures 4B and 4C). In one embodiment, the upper O-ring gland 480 is formed at the top of damper housing 420.

In one embodiment, the upper O-ring gland 480 allows an upper O-ring 481 to be added above both the annular intake pathway 405 and the annular exhaust pathway 415 of the annular base valve assembly 400. The upper O-ring 481 will provide a seal around the annular base valve assembly 400 that will stop (or significantly reduce) the working fluid from bypassing (as shown in the arrows of Figure 4E) the valving 345 of the annular base valve assembly 400 and flowing directly from the damper body 420 to the annular intake pathway 405 (and/or annular exhaust pathway 415). As such, all (or nearly all) the working fluid will have to flow through the valving 345 of the annular base valve assembly 400 as it transits from the damper body 420 to the intake pathway 455.

In one embodiment, due to the addition of the upper O-ring 481 (and the associated reduction in working fluid blowby) the damping system can be tested to determine whether or not the annular base valve assembly 400 was properly installed within the damper housing 420. For example, the valving 345 of the annular base valve assembly 400 is closed, pressure is applied to the system, and the pressure is monitored. If there is a pressure drop then there is leakage and there is a problem with the annular base valve assembly 400 installation. In contrast, if there is no pressure drop, there is no leakage (or blowby as indicated by the arrows of Figure 4E) and the annular base valve assembly 400 has been installed correctly in the damper housing 420.

In the clocking feature embodiments described herein, when damper performance is reduced, it is possible that the reduced performance is based on one or both of 1) the improper assembly and/or misalignment of the clocked base valve assembly 300 within the damper housing 420 allowing for working fluid blowby, and/or 2) an improper operation (e.g., failure, clog, etc.) of the valving within the clocked base valve assembly 300. However, it is not possible to isolate either of the two problem points to determine which of the two issues exists.

In contrast, in the annular base valve assembly 400, the addition of the upper O-ring 481 allows the damping system to be tested to determine whether or not there is leakage due to improper installation of the annular base valve assembly 400. For example, when damper performance is reduced, the valving 345 of the annular base valve assembly 400 is closed, pressure is applied to the system, and the pressure is then monitored to determine if there is any pressure drop (e.g., leakage). If there is no pressure drop, then there is no improper assembly and/or misalignment of the annular base valve assembly 400 as there is no working fluid blowby. As such, the reduced damper performance would likely be due to improper operation (e.g., failure, clog, etc.) of the valving 345 within the annular base valve assembly 400.

In contrast, if there is a pressure drop, then there is working fluid blowby and improper assembly, misalignment of the annular base valve assembly 400, and/or failure of the upper O-ring 481 is likely identified. As such, the reduced damper performance would likely not be due to improper operation (e.g., failure, clog, etc.) of the valving 345 within the annular base valve assembly 400.

In one embodiment, the annular base valve assembly 400 also provides for flexibility with regard to where the control solenoid 350 is located. For example, in the clocking feature embodiment, the control solenoid 350, or at least the intake fluid pathway opening 205 in the damper housing 420 through which the control solenoid 350 was fluidly coupled, had to be located perpendicular to X-axis of the damping assembly.

In contrast, in one embodiment, the annular base valve assembly 400 allows the control solenoid housing (or portion thereof) to be located with much more flexibility. In other words, the location of the control solenoid 350 can be provided along any pathway (not just perpendicular to the X-axis) as long as there is a flow path to connect the annular intake pathway 405 with the intake pathway 455 of the control solenoid 350. This capability will provide the manufacturer with an opportunity to modify and/or reduce the footprint, packaging size, orientation and the like of the control solenoid housing (or portion thereof). In one embodiment, the location and/or orientation could be modified as part of a use based orientation, e.g., a protected location, a different location for different damper assembly applications, and the like. Thus, in one embodiment of the annular base valve assembly 400, the location and/or direction of the control solenoid 350 and its associated housing (or portion thereof) e.g., the angle between X-axis and the control solenoid housing (or portion thereof), can be reduced to less than 90 degrees (e.g., 30 degrees, 45 degrees, 60 degrees, 80 degrees, etc.).

In one embodiment, the annular base valve assembly 400 is located in the damper housing 420. In one embodiment, the annular base valve assembly 400 is located in the reservoir housing of external reservoir 125 and is fluidly coupled with the damper housing 420.

In one embodiment, by moving from a clocking feature embodiment to the annular base valve assembly 400 embodiment, a number of manufacturing, production, and assembly improvements are realized.

In the annular base valve assembly 400, the removal of any clocking feature requirements will reduce the manufacturing requirements and therefore the production time for both the damper housing 420 and annular base valve assembly 400. For example, since the clocking features do not have to be added to, milled into, or otherwise used in the damper housing 420 and annular base valve assembly 400 manufacturing process, the manufacturing intricacy of the damper housing 420 and the annular base valve assembly 400 are reduced. This reduction in manufacturing intricacy will result in reduced production time, reduced manufacturing costs, and reduced labor requirements.

Moreover, the removal of the clocking feature requirements will reduce the complication of the assembly of the annular base valve assembly 400 within the damper housing 420 as the annular base valve assembly 400 can be installed in any rotational orientation into the damper housing 420. This removal of rotational orientation will also reduce assembly time as there will no longer be a need to remove and reinstall an annular base valve assembly 400 that was misaligned with respect to the clocking feature. The removal of rotational orientation will also reduce waste due to accidental or forced clocking feature misalignment resulting in damage to one or both of the damper housing 420 and the annular base valve assembly 400.

In one embodiment, during assembly of a clocked base valve assembly 300 and damper housing 120, there is a 2-8% error rate. In contrast, during assembly of the annular base valve assembly 400, that error rate is reduced to zero as no clocking is required.

### Reservoir/Control Valve Guard

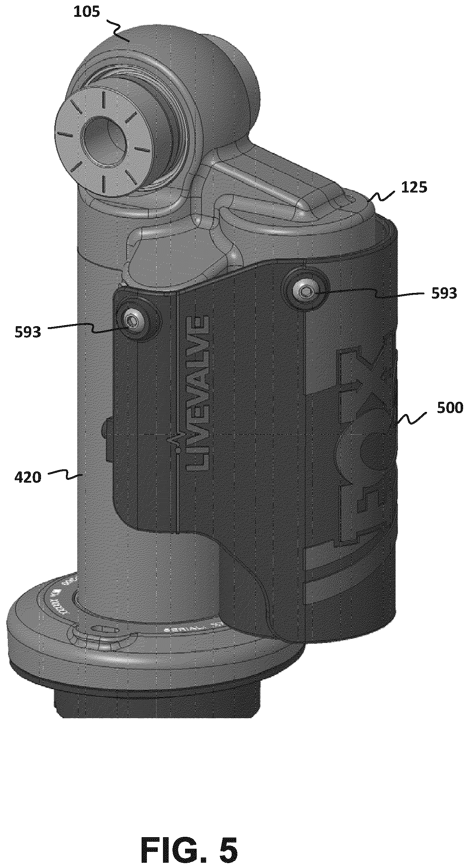

With reference now to Figures 5, a perspective view of a guard 500 located about the reservoir 125 of the shock assembly is shown in accordance with an embodiment.

In one embodiment, guard 500 is installed around the external reservoir 125 and held in a fixed position with respect to damper housing 420 (or damper housing 120 in the clocked embodiments) by at least one retaining feature 593 such as a clip, screw, rivet, quick release, or the like. In one embodiment, the guard 500 is used around the external reservoir 125 and to protect the control solenoid 350 and/or control solenoid housing (or portion thereof) that is extending from the damper housing 420. In one embodiment, the guard 500 is made of a metal such as aluminum, titanium, copper, brass, steel, or the like. In one embodiment, the guard 500 is coated with a protective coating such as a melanite coating (e.g., carbon nitriding) or the like.

In one embodiment, the guard 500 is made of a composite material such as, but not limited to, glass filled nylon (such as for example, 33% glass reinforced Nylon 6/6), injection molded carbon fiber, carbon fiber with reinforced nylon, compression molding, composite layering, nylon reinforced with carbon fibers, chopped carbon fibers, a plastic, polymer, other long fiber-reinforced plastics, or the like.

In one embodiment, the guard 500 is formed from a combination of materials such as an outer harder layer such as aluminum and an inner composite material. In one embodiment, by forming the guard 500 from a combination of materials, the outer portion of the guard 500 would have the increased damage resilience while the overall weight of the guard 500 could be reduced.

### Example Active Valve

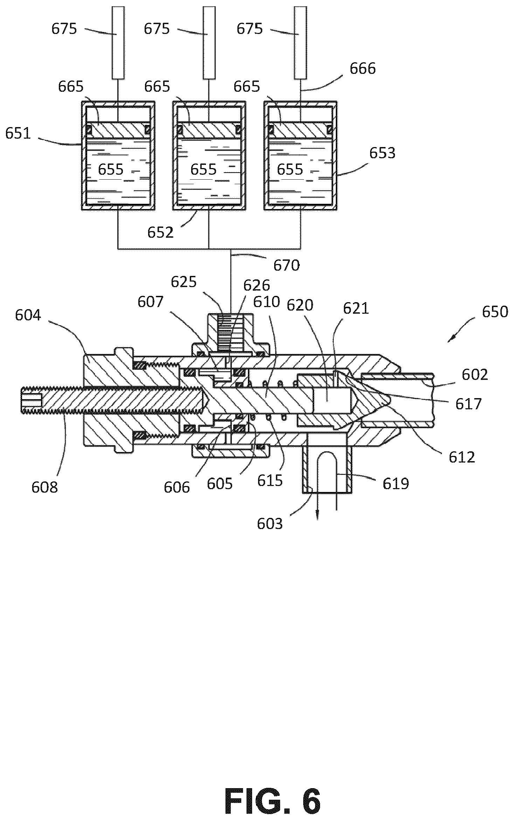

Referring now to Figure 6, an enlarged view of an active valve 650 is shown in accordance with an embodiment.

In the following discussion, the term "active", as used when referring to a valve or shock assembly component, means adjustable, manipulatable, etc., during typical operation of the valve. For example, an active valve can have its operation changed to thereby alter a corresponding shock assembly characteristic damping from a "soft" setting to a "firm" setting (or a stiffness setting somewhere therebetween) by, for example, adjusting a switch in a passenger compartment of a vehicle. Additionally, it will be understood that in some embodiments, an active valve may also be configured to automatically adjust its operation, and corresponding shock assembly damping characteristics, based upon, for example, operational information pertaining to the vehicle and/or the suspension with which the valve is used.

Similarly, it will be understood that in some embodiments, an active valve may be configured to automatically adjust its operation, and corresponding shock assembly damping characteristics, based upon received user input settings (e.g., a user-selected "comfort" setting, a user-selected "sport" setting, and the like). In many instances, an "active" valve is adjusted or manipulated electronically (e.g., using a powered solenoid, or the like) to alter the operation or characteristics of a valve and/or other component. As a result, in the field of suspension components and valves, the terms "active", "electronic", "electronically controlled", and the like, are often used interchangeably.

In the following discussion, the term "manual" as used when referring to a valve or shock assembly component means manually adjustable, physically manipulatable, etc., without requiring disassembly of the valve, damping component, or shock assembly which includes the valve or damping component. In some instances, the manual adjustment or physical manipulation of the valve, damping component, or shock assembly which includes the valve or damping component, occurs when the valve is in use. For example, a manual valve may be adjusted to change its operation to alter a corresponding shock assembly damping characteristic from a "soft" setting to a "firm" setting (or a stiffness setting somewhere therebetween) by, for example, manually rotating a knob, pushing or pulling a lever, physically manipulating an air pressure control feature, manually operating a cable assembly, physically engaging a hydraulic unit, and the like. For purposes of the present discussion, such instances of manual adjustment/physical manipulation of the valve or component can occur before, during, and/or after "typical operation of the vehicle".

It should further be understood that a vehicle suspension may also be referred to using one or more of the terms "passive", "active", "semi-active" or "adaptive". As is typically used in the suspension art, the term "active suspension" refers to a vehicle suspension which controls the vertical movement of the wheels relative to vehicle. Moreover, "active suspensions" are conventionally defined as either a "pure active suspension" or a "semi-active suspension" (a "semi-active suspension" is also sometimes referred to as an "adaptive suspension"). In a conventional "pure active suspension", a motive source such as, for example, an actuator, is used to move (e.g. raise or lower) a wheel with respect to the vehicle. In a "semi-active suspension", no motive force/actuator is employed to adjust move (e.g. raise or lower) a wheel with respect to the vehicle.

Rather, in a "semi-active suspension", the characteristics of the suspension (e.g. the firmness of the suspension) are altered during typical use to accommodate conditions of the terrain and/or the vehicle. Additionally, the term "passive suspension", refers to a vehicle suspension in which the characteristics of the suspension are not changeable during typical use, and no motive force/actuator is employed to adjust move (e.g. raise or lower) a wheel with respect to the vehicle. As such, it will be understood that an "active valve", as defined above, is well suited for use in a "pure active suspension" or a "semi-active suspension".

Although Figure 6 shows the active valve 650 in a closed position (e.g. during a rebound stroke of the shock assembly), the following discussion also includes the opening of active valve 650. Active valve 650 includes a valve body 604 housing a movable valve piston 605 which is sealed within the body. The valve piston 605 includes a sealed chamber 607 adjacent an annularly-shaped piston surface 606 at a first end thereof. The chamber 607 and annularly-shaped piston surface 606 are in fluid communication with a port 625 accessed via opening 626. Two additional fluid communication points are provided in the body including an inlet (such as orifice 602) and an outlet (such as orifice 603) for fluid passing through the active valve 650.

Extending from a first end of the valve piston 605 is a shaft 610 having a cone shaped member 612 (other shapes such as spherical or flat, with corresponding seats, will also work suitably well) disposed on an end thereof. The cone shaped member 612 is telescopically mounted relative to, and movable on, the shaft 610 and is biased toward an extended position due to a spring 615 coaxially mounted on the shaft 610 between the member 612 and the valve piston 605. Due to the spring biasing, the cone shaped member 612 normally seats itself against a valve seat 617 formed in an interior of the valve body 604.

As shown, the cone shaped member 612 is seated against valve seat 617 due to the force of the spring 615 and absent an opposite force from fluid entering the active valve 650 along orifice 602. As cone shaped member 612 telescopes out, a gap 620 is formed between the end of the shaft 610 and an interior of member 612. A vent 621 is provided to relieve any pressure formed in the gap. With a fluid path through the active valve 650 (from 603 to 602) closed, fluid communication is substantially shut off from the rebound side of the cylinder into the valve body (and hence to the compression side) and its "dead-end" path is shown by arrow 619.

In one embodiment, there is a manual pre-load adjustment on the spring 615 permitting a user to hand-load or un-load the spring using a threaded member 608 that transmits motion of the valve piston 605 towards and away from the conical member, thereby changing the compression on the spring 615.

Also shown in Figure 6 is a plurality of valve operating cylinders 651, 652, 653. In one embodiment, the cylinders each include a predetermined volume of fluid 655 that is selectively movable in and out of each cylindrical body through the action of a separate corresponding piston 665 and rod 666 for each cylindrical body. A fluid path 670 runs between each cylinder and port 625 of the valve body where annularly-shaped piston surface 606 is exposed to the fluid.

Because each cylinder has a specific volume of substantially incompressible fluid and because the volume of the sealed chamber 607 adjacent the annularly-shaped piston surface 606 is known, the fluid contents of each cylinder can be used, individually, sequentially or simultaneously to move the piston a specific distance, thereby effecting the damping characteristics of the suspension system in a relatively predetermined and precise way.

While the cylinders 651-653 can be operated in any fashion, in the embodiment shown each piston 665 and rod 666 is individually operated by a solenoid 675 and each solenoid, in turn, is operable from a remote location of the vehicle, like a cab of a motor vehicle or even the handlebar area of a motor or bicycle (not shown). Electrical power to the solenoids 675 is available from an existing power source of a vehicle or is supplied from its own source, such as on-board batteries. Because the cylinders may be operated by battery or other electric power or even manually (e.g. by syringe type plunger), there is no requirement that a so-equipped suspension rely on any pressurized vehicle hydraulic system (e.g. steering, brakes) for operation. Further, because of the fixed volume interaction with the bottom out valve there is no issue involved in stepping from hydraulic system pressure to desired suspension bottom out operating pressure.

In one embodiment, e.g., when active valve 650 is in the damping-open position, fluid flow through orifice 602 provides adequate force on the cone shaped member 612 to urge it backwards, at least partially loading the spring 615 and creating a fluid flow path from the orifice 602 into and through orifice 603.

The characteristics of the spring 615 are typically chosen to permit active valve 650 (e.g. cone shaped member 612) to open at a predetermined pressure, with a predetermined amount of control pressure applied to port 625. For a given spring 615, higher control pressure at port 625 will result in higher pressure required to open the active valve 650 and correspondingly higher damping resistance in orifice 602. In one embodiment, the control pressure at port 625 is raised high enough to effectively "lock" the active valve closed resulting in a substantially rigid compression shock assembly (particularly true when a solid piston is also used).

In one embodiment, the valve is open in both directions when the cone shaped member 612 is "topped out" against valve body 604. In another embodiment however, when the valve piston 605 is abutted or "topped out" against valve body 604 the spring 615 and relative dimensions of the active valve 650 still allow for the cone shaped member 612 to engage the valve seat 617 thereby closing the valve. In such embodiment backflow from the rebound side to the compression side is always substantially closed and cracking pressure from flow along orifice 602 is determined by the pre-compression in the spring 615. In such embodiment, additional fluid pressure may be added to the inlet through port 625 to increase the cracking pressure for flow along orifice 602 and thereby increase compression damping. It is generally noteworthy that while the descriptions herein often relate to compression damping and rebound shut off, some or all of the channels (or channel) on a given suspension unit may be configured to allow rebound damping and shut off or impede compression damping.

While the examples illustrated relate to manual operation and automated operation based upon specific parameters, in various embodiments, active valve 650 can be remotelyoperated and can be used in a variety of ways with many different driving and road variables and/or utilized at any point during use of a vehicle. In one example, active valve 650 is controlled based upon vehicle speed in conjunction with the angular location of the vehicle's steering wheel. In this manner, by sensing the steering wheel turn severity (angle of rotation and rotational velocity), additional damping (by adjusting the corresponding size of the opening of orifice 602 by causing cone shaped member 612 to open, close, or partially close orifice 602) can be applied to one shock assembly or one set of vehicle shock assemblies on one side of the vehicle (suitable for example to mitigate cornering roll) in the event of a sharp turn at a relatively high speed.

In another example, a transducer, such as an accelerometer, measures other aspects of the vehicle's suspension system, like axle force and/or moments applied to various parts of the vehicle, like steering tie rods, and directs change to position of active valve 650 (and corresponding change to the working size of the opening of orifice 602 by causing cone shaped member 612 to open, close, or partially close orifice 602) in response thereto. In another example, active valve 650 is controlled at least in part by a pressure transducer measuring pressure in a vehicle tire and adding damping characteristics to some or all of the wheels (by adjusting the working size of the opening of orifice 602 by causing cone shaped member 612 to open, close, or partially close orifice 602) in the event of, for example, an increased or decreased pressure reading.

In one embodiment, active valve 650 is controlled in response to braking pressure (as measured, for example, by a brake pedal (or lever) sensor or brake fluid pressure sensor or accelerometer). In still another example, a parameter might include a gyroscopic mechanism that monitors vehicle trajectory and identifies a "spin-out" or other loss of control condition and adds and/or reduces damping to some or all of the vehicle's shock assemblies (by adjusting the working size of the opening of orifice 602 by causing cone shaped member 612 to open, close, or partially close orifice 602 chambers) in the event of a loss of control to help the operator of the vehicle to regain control.

For example, active valve 650, when open, permits a first flow rate of the working fluid through orifice 602. In contrast, when active valve 650 is partially closed, a second flow rate of the working fluid though orifice 602 occurs. The second flow rate is less than the first flow rate but greater than no flow rate. When active valve 650 is completely closed, the flow rate of the working fluid though orifice 602 is statistically zero.

In one embodiment, instead of (or in addition to) restricting the flow through orifice 602, active valve 650 can vary a flow rate through an inlet or outlet passage within the active valve 650, itself. In other words, the active valve, can be used to meter the working fluid flow (e.g., control the rate of working fluid flow) with/or without adjusting the flow rate through orifice. Additional information regarding active and semi-active valves, including those used for compression and/or rebound stiffness adjustments, preload adjustments, bottom-out control, preload adjustment, ride height adjustment, and the like see, as an example, the electronic valve of U.S. Patent 9,353,818 and U.S. Patent 9,623,716.

Due to the active valve 650 arrangement, a relatively small solenoid (using relatively low amounts of power) can generate relatively large damping forces. Furthermore, due to incompressible fluid inside the shock assembly 38, damping occurs as the distance between cone shaped member 612 and orifice 602 is reduced. The result is a controllable damping rate. Additional active and semi-active valve features are described and shown in U.S. Pat. Nos. 8,627,932; 8,857,580; 9,033,122; 9,120,362; and 9,239,090.

It should be appreciated that when the valve body 604 rotates in a reverse direction than that described above and herein, the cone shaped member 612 moves away from orifice 602 providing at least a partially opened fluid path.

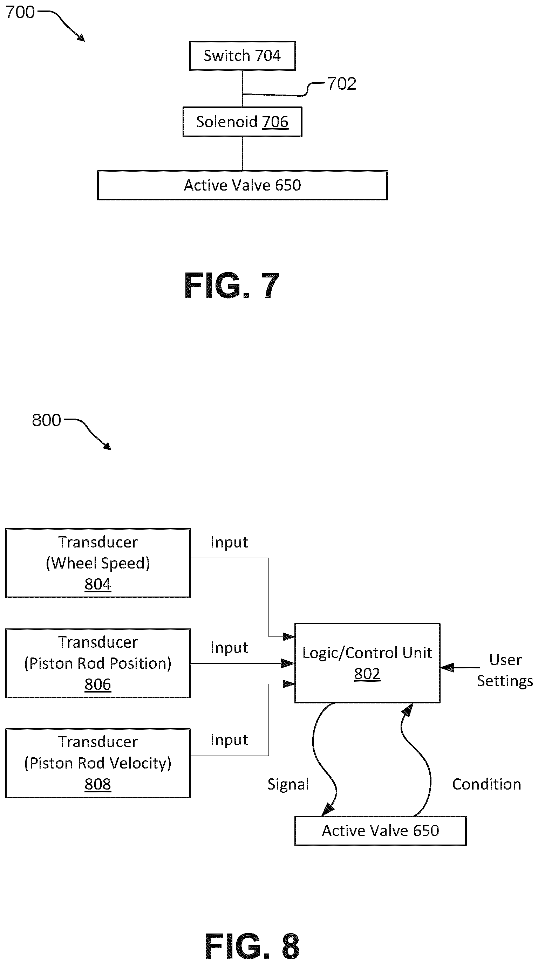

Figure 7 is a schematic diagram showing a control arrangement 700 for a remotely-operated active valve 650. As illustrated, a signal line 702 runs from a switch 704 to a solenoid 706. Thereafter, the solenoid 706 converts electrical energy into mechanical movement and rotates valve body 604 within active valve 650, In one embodiment, the rotation of valve body 604 causes an indexing ring consisting of two opposing, outwardly spring-biased balls to rotate among indentions formed on an inside diameter of a lock ring.

As the valve body 604 rotates, cone shaped member 612 at an opposite end of the valve is advanced or withdrawn from an opening in orifice 602. For example, the valve body 604 is rotationally engaged with the cone shaped member 612. A male hex member extends from an end of the valve body 604 into a female hex profile bore formed in the cone shaped member 612. Such engagement transmits rotation from the valve body 604 to the cone shaped member 612 while allowing axial displacement of the cone shaped member 612 relative to the valve body 604. Therefore, while the body does not axially move upon rotation, the threaded cone shaped member 612 interacts with mating threads formed on an inside diameter of the bore to transmit axial motion, resulting from rotation and based on the pitch of the threads, of the cone shaped member 612 towards or away from an orifice 602, between a closed position, a partially open position, and a fully or completely open position.

Adjusting the opening of orifice 602 modifies the flowrate of the fluid through active valve 650 thereby varying the stiffness of a corresponding shock assembly 38. While Figure 7 is simplified and involves control of a single active valve 650, it will be understood that any number of active valves corresponding to any number of fluid channels (e.g., bypass channels, external reservoir channels, bottom out channels, etc.) for a corresponding number of vehicle suspension shock assemblies could be used alone or in combination. That is, one or more active valves could be operated simultaneously or separately depending upon needs in a vehicular suspension system.

For example, a suspension shock assembly could have one, a combination of, or each of an active valve(s): for a bottom out control, an internal bypass, for an external bypass, for a fluid conduit to the external reservoir 125, etc. In other words, anywhere there is a fluid flow path within a shock assembly 38, an active valve could be used. Moreover, the active valve could be alone or used in combination with other active valves at other fluid flow paths to automate one or more of the performance characteristics of the shock assembly. Moreover, additional switches could permit individual operation of separate active bottom out valves.

In addition to, or in lieu of, the simple, switch-operated remote arrangement of Figure 7, the remotely-operable active valve 650 can be operated automatically based upon one or more driving conditions, and/or automatically or manually utilized at any point during use of a vehicle. Figure 8 shows a schematic diagram of a control system 800 based upon any or all of vehicle speed, damper rod speed, and damper rod position. One embodiment of the arrangement of Figure 8 is designed to automatically increase damping in a shock assembly in the event a damper rod reaches a certain velocity in its travel towards the bottom end of a shock assembly at a predetermined speed of the vehicle.

In one embodiment, the control system 800 adds damping (and control) in the event of rapid operation (e.g. high rod velocity) of the shock assembly 38 to avoid a bottoming out of the damper rod as well as a loss of control that can accompany rapid compression of a shock assembly with a relative long amount of travel. In one embodiment, the control system 800 adds damping (e.g., adjusts the size of the opening of orifice 602 by causing cone shaped member 612 to open, close, or partially close orifice 602) in the event that the rod velocity in compression is relatively low but the rod progresses past a certain point in the travel.

Such configuration aids in stabilizing the vehicle against excessive low-rate suspension movement events such as cornering roll, braking and acceleration yaw and pitch and "g-out."

Figure 8 illustrates, for example, a control system 800 including three variables: wheel speed, corresponding to the speed of a vehicle component (measured by wheel speed transducer 804), piston rod position (measured by piston rod position transducer 806), and piston rod velocity (measured by piston rod velocity transducer 808). Any or all of the variables shown may be considered by logic unit 802 in controlling the solenoids or other motive sources coupled to active valve 650 for changing the working size of the opening of orifice 602 by causing cone shaped member 612 to open, close, or partially close orifice 602. Any other suitable vehicle operation variable may be used in addition to or in lieu of the variables discussed herein, such as, for example, piston rod compression strain, eyelet strain, vehicle mounted accelerometer (or tilt/inclinometer) data or any other suitable vehicle or component performance data.

In one embodiment, the piston's position within the damping chamber is determined using an accelerometer to sense modal resonance of the suspension shock assembly or other connected suspension element such as the tire, wheel, or axle assembly. Such resonance will change depending on the position of the piston and an on-board processor (computer) is calibrated to correlate resonance with axial position. In one embodiment, a suitable proximity sensor or linear coil transducer or other electro-magnetic transducer is incorporated in the damping chamber to provide a sensor to monitor the position and/or speed of the piston (and suitable magnetic tag) with respect to a housing of the suspension shock assembly.

In one embodiment, the magnetic transducer includes a waveguide and a magnet, such as a doughnut (toroidal) magnet that is joined to the cylinder and oriented such that the magnetic field generated by the magnet passes through the rod and the waveguide. Electric pulses are applied to the waveguide from a pulse generator that provides a stream of electric pulses, each of which is also provided to a signal processing circuit for timing purposes. When the electric pulse is applied to the waveguide, a magnetic field is formed surrounding the waveguide. Interaction of this field with the magnetic field from the magnet causes a torsional strain wave pulse to be launched in the waveguide in both directions away from the magnet. A coil assembly and sensing tape is joined to the waveguide. The strain wave causes a dynamic effect in the permeability of the sensing tape which is biased with a permanent magnetic field by the magnet. The dynamic effect in the magnetic field of the coil assembly due to the strain wave pulse, results in an output signal from the coil assembly that is provided to the signal processing circuit along signal lines.

By comparing the time of application of a particular electric pulse and a time of return of a sonic torsional strain wave pulse back along the waveguide, the signal processing circuit can calculate a distance of the magnet from the coil assembly or the relative velocity between the waveguide and the magnet. The signal processing circuit provides an output signal, which is digital or analog, proportional to the calculated distance and/or velocity. Additional examples and embodiments for transducer-operated arrangement for measuring piston rod speed and velocity are described in U.S. Pat. Nos. 9,623,716 and 10,036,443.

While transducers located at the suspension shock assembly measure piston rod velocity (piston rod velocity transducer 808), and piston rod position (piston rod position transducer 806), a separate wheel speed transducer 804 for sensing the rotational speed of a wheel about an axle includes housing fixed to the axle and containing therein, for example, two permanent magnets. In one embodiment, the magnets are arranged such that an elongated pole piece commonly abuts first surfaces of each of the magnets, such surfaces being of like polarity. Two inductive coils having flux-conductive cores axially passing therethrough abut each of the magnets on second surfaces thereof, the second surfaces of the magnets again being of like polarity with respect to each other and of opposite polarity with respect to the first surfaces. Additional examples and embodiments of wheel speed transducers are described in U.S. Pat. Nos. 9,033,122; 9,452,654; 10,040,329; 10,047,817; 10,060,499.

In one embodiment, as illustrated in Figure 8, the logic unit 802 with user-definable settings receives inputs from piston rod position transducer 806, piston rod velocity transducer 808, as well as wheel speed transducer 804. Logic unit 802 is user-programmable and, depending on the needs of the operator, logic unit 802 records the variables and, then, if certain criteria are met, logic unit 802 sends its own signal to active valve 650 (e.g., the logic unit 802 is an activation signal provider) to cause active valve 650 to move into the desired state (e.g., adjust the flow rate by adjusting the distance between cone shaped member 612 and orifice 602). Thereafter, the condition, state or position of active valve 650 is relayed back to logic unit 802 via an active valve monitor or the like.

In one embodiment, logic unit 802 shown in Figure 8 assumes a single active valve 650 corresponding to a single orifice 602 of a single shock assembly 38, but logic unit 802 is usable with any number of active valves or groups of active valves corresponding to any number of orifices, or groups of orifices. For instance, the suspension shock assemblies on one side of the vehicle can be acted upon while the vehicles other suspension shock assemblies remain unaffected.

The examples set forth herein were presented in order to best explain, to describe particular applications, and to thereby enable those skilled in the art to make and use embodiments of the described examples. However, those skilled in the art will recognize that the foregoing description and examples have been presented for the purposes of illustration and example only. The description as set forth is not intended to be exhaustive or to limit the embodiments to the precise form disclosed. Rather, the specific features and acts described above are disclosed as example forms of implementing the Claims.

Reference throughout this document to "one embodiment," "certain embodiments," "an embodiment," "various embodiments," "some embodiments," "various embodiments", or similar term, means that a particular feature, structure, or characteristic described in connection with that embodiment is included in at least one embodiment. Thus, the appearances of such phrases in various places throughout this specification are not necessarily all referring to the same embodiment. Furthermore, the particular features, structures, or characteristics of any embodiment may be combined in any suitable manner with one or more other features, structures, or characteristics of one or more other embodiments without limitation.

The foregoing Description of Embodiments is not intended to be exhaustive or to limit the embodiments to the precise form described. Instead, The examples set forth herein were presented in order to best explain, to describe particular applications, and to thereby enable those skilled in the art to make and use embodiments of the described examples. However, those skilled in the art will recognize that the foregoing description and examples have been presented for the purposes of illustration and example only. The description as set forth is not intended to be exhaustive or to limit the embodiments to the precise form disclosed. Rather, the specific features and acts described above are disclosed as example forms of implementing the Claims and their equivalents.

## Claims

1. A shock with an annular base valve flow system comprising:
a housing, said housing having an inner diameter (ID) and an outer diameter (OD); and
an annular base valve assembly, said annular base valve assembly having an OD smaller than said ID of said housing, such that said annular base valve assembly is insertable into said housing, said annular base valve assembly comprising:
an intake pathway axially about a portion of said OD of said base valve assembly; and
an exhaust pathway axially about another portion of said OD of said base valve assembly.

2. The shock with a base valve annular flow system of Claim 1, further comprising:
a control solenoid, said control solenoid fluidly coupled with said intake pathway of said annular base valve assembly, said control solenoid configured to control a flow of a working fluid through said intake pathway.

3. The shock with a base valve annular flow system of Claim 1 or 2, wherein said annular base valve assembly is insertable into said housing without concern about an axial orientation of said annular base valve assembly with respect to said housing.

4. The shock with a base valve annular flow system of Claim 1, 2 or 3, wherein said annular base valve assembly is axially symmetric.

5. The shock with a base valve annular flow system of Claim 1, 2, 3 or 4, wherein said housing is a damper housing.

6. The shock with a base valve annular flow system of any preceding Claim, wherein said housing is an external reservoir housing.

7. The shock with a base valve annular flow system of any preceding Claim, wherein said housing further comprises:
a base valve seat axially about said ID of said housing, said base valve seat configured to properly locate said annular base valve assembly when said annular base valve assembly is inserted into said housing.

8. The shock with a base valve annular flow system of any preceding Claim, wherein said housing further comprises:
an upper O-ring gland axially about said ID of said housing, said upper O-ring gland located above a base valve seat portion such that when said annular base valve assembly is properly located within said housing, said upper O-ring gland is aligned with a portion of said OD of said base valve assembly exterior of both said intake pathway and said exhaust pathway.

9. The shock with a base valve annular flow system of Claim 8, wherein said housing further comprises:
an upper O-ring configured to fit with said upper O-ring gland, said upper O-ring to form a seal between said annular base valve assembly and said housing to prevent a working fluid from bypassing a valving of said annular base valve assembly as said working fluid flows from a main damper body to said intake pathway.

10. The shock with a base valve annular flow system of any preceding Claim, wherein said annular base valve assembly further comprises:
a middle O-ring gland about a portion of said OD of said base valve assembly, said middle O-ring gland located between said intake pathway and said exhaust pathway; and
a middle O-ring configured to fit with said middle O-ring gland, said middle O-ring to form a seal between said annular base valve assembly and said housing to prevent a working fluid from moving between said intake pathway and said exhaust pathway.

11. The shock with an annular base valve flow system as claimed in any preceding Claim, wherein
said intake pathway comprises an annular intake pathway; and
said exhaust pathway comprises an annular exhaust pathway.

12. The shock with an annular base valve flow system as claimed in any preceding Claim, wherein the shock is adapted to absorb some or all of a movement that is received at a first portion of a vehicle before it is transmitted to a second portion of the vehicle.

13. The shock with an annular base valve flow system as claimed in any preceding Claim, wherein said shock comprises a shock absorber or damper for a vehicle.

14. A vehicle comprising a shock as claimed in any preceding claim.

15. A vehicle as claimed in claim 14, said vehicle comprising a road bike, a mountain bike, a gravel bike, an electric bike (e-bike), a hybrid bike, a scooter, a motorcycle, an ATV, a personal water craft (PWC), a four-wheeled vehicle, a snow mobile, or a UTV such as a side-by-side.
